# EUROPÄISCHE PATENTANMELDUNG

(11) **EP 4 119 019 A1**
(43) Veröffentlichungstag der Anmeldung: **18.01.2023**
(21) Anmeldenummer: 21185463.3
(22) Anmeldetag: 14.07.2021
(51) Int. Cl.: A47J 43/25, A47J 43/07, B26D 3/11

(54) **SCHNEIDVORRICHTUNG FÜR EINE ZERKLEINERUNG VON LEBENSMITTELN UND SPEISENZUBEREITUNGSGERÄT**

(71) Anmelder: Vorwerk & Co. Interholding GmbH, 42270 Wuppertal (DE)
(72) Erfinder: Heynen, Andreas, 42477 Radevormwald (DE); Landsecker, Kai, 40213 Düsseldorf (DE); Diel, Maria, 42799 Leichlingen (DE)
(74) Vertreter: Gille Hrabal Partnerschaftsgesellschaft mbB Patentanwälte

(57) **Zusammenfassung**

Die Erfindung betrifft eine Schneidvorrichtung für eine Zerkleinerung von Lebensmitteln mit einer Schneidscheibe (17) mit Reib- und/oder Schneidelementen (18, 19,20), mit einer Welle (22) für die Schneidscheibe (17), wobei die Schneidscheibe (17) an der Welle (22) befestigt ist oder lösbar an der Welle (22) befestigt werden kann, mit einem Zuführstutzen, über den Lebensmittel zur Schneidscheibe (17) geführt werden können, wobei der Zuführstutzen zwei Schächte (6) umfasst, die durch eine Trennwand (14) voneinander getrennt sind, wobei über einen jeden Schacht (6) ein Lebensmittel (48) zur Schneidscheibe (17) geführt werden kann, dadurch gekennzeichnet, dass die Trennwand (14) in Aufsicht gesehen eine Einbuchtung umfasst. Die Erfindung betrifft außerdem ein Bauteil (5) mit einem Zuführstutzen für die Schneidvorrichtung.

## Beschreibung

Die Erfindung betrifft eine Schneidvorrichtung für eine Zerkleinerung von Lebensmitteln. Die Erfindung betrifft außerdem ein Bauteil mit einem Zuführstutzen für die Schneidvorrichtung.

Ein Speisenzubereitungsgerät ist ein Gerät für eine Küche, also ein Küchengerät. Das Speisenzubereitungsgerät umfasst ein Zubereitungsgefäß, in dem die Speise zubereitet werden kann. Das Speisenzubereitungsgerät kann einen Deckel für das Zubereitungsgefäß umfassen. Das Speisenzubereitungsgerät kann eine Verriegelungseinrichtung für das Verriegeln des Deckels umfassen, wenn der Deckel auf das Zubereitungsgefäß aufgesetzt ist. Das Speisenzubereitungsgerät kann einen Sensor umfassen, der ausgelöst ist, wenn die Verriegelungseinrichtung den aufgesetzten Deckel verriegelt. Das Speisenzubereitungsgerät umfasst die Schneidvorrichtung.

Ein Küchengerät mit einer Schneidvorrichtung ist aus der Druckschrift EP 3 427 621 A1 bekannt. Die Schneidvorrichtung umfasst eine drehbare Schneidscheibe, mit der ein Lebensmittel zerkleinert werden kann.

Elektrisch betriebene Küchengeräte mit einem Zubereitungsgefäß und einem Deckel für das Zubereitungsgefäß sind aus den Druckschriften DE 10 2014 111 193 A1 sowie DE 10 2017 121 946 A1 bekannt.

Es ist Aufgabe der Erfindung, eine Schneidvorrichtung zu schaffen, mit der besonders gleichmäßig zerkleinert werden kann.

Die Aufgabe der Erfindung wird durch eine Schneidvorrichtung mit den Merkmalen des ersten Anspruchs gelöst. Der Nebenanspruch betrifft ein Bauteil mit einem Zuführstutzen für die Schneidvorrichtung.

Die Schneidvorrichtung umfasst eine drehbare Schneidscheibe mit Reib- und/oder Schneidelementen. Die Schneidscheibe ist grundsätzlich ein kreisrunder Körper, dessen Radius um ein Vielfaches höher ist als seine Dicke. Die Schneidscheibe besteht aus Stabilitätsgründen grundsätzlich aus Metall. Schneidelemente der Schneidscheibe umfassen scharfe Kanten für ein Zerschneiden von Lebensmitteln. Reibelemente können abstehende Zähne oder Stifte sein. Die Zähne bzw. Stifte können spitz zulaufen und/oder scharfkantig sein.

Die Schneidscheibe ist an einer Welle befestigt oder kann an der Welle lösbar befestigt werden. Um die Schneidvorrichtung platzsparend ohne großen Aufwand lagern zu können, kann die Schneidscheibe vorteilhaft von der Welle gelöst werden, ohne dafür Werkzeug einsetzen zu müssen. Die Welle kann aus Kunststoff bestehen, um den Fertigungsaufwand und das Gewicht gering halten zu können.

Die Schneidvorrichtung umfasst einen Zuführstutzen, über den ein Lebensmittel zur Schneidscheibe geführt werden kann. Wird ein Lebensmittel über den Zuführstutzen der Schneidscheibe zugeführt und dreht sich die Schneidscheibe, so wird dadurch das zugeführte Lebensmittel zerkleinert.

Der Zuführstutzen umfasst zwei Schächte. Über einen jeden Schacht kann ein Lebensmittel zur Schneidscheibe geführt werden. Die beiden Schächte sind durch eine Trennwand voneinander getrennt.

Die Trennwand ist grundsätzlich geschlossen und weist grundsätzlich eine glatte Oberfläche auf. Auch die Wandung des Zuführstutzens ist grundsätzlich geschlossen. Zumindest die Innenseite der Wandung des Zuführstutzens ist vorzugsweise glatt. Durch glatte Wandungen kann ein Lebensmittel einen jeden Schacht möglichst ungehindert passieren. Geschlossene Wandungen vermeiden, dass ein Lebensmittel einen Schacht unplanmäßig durch seitliche Öffnungen hindurch verlassen kann.

Zuführstutzen und Trennwand können in einem Arbeitsschritt beispielsweise durch Spritzgießen einstückig hergestellt worden sein. Zuführstutzen und Trennwand können aus Kunststoff bestehen, um den Fertigungsaufwand und das Gewicht gering zu halten. Ein jeder Schacht verläuft insbesondere geradlinig, damit ein Lebensmittel einen jeden Schacht möglichst ungehindert passieren kann.

Die Trennwand umfasst in Aufsicht gesehen eine Einbuchtung. Die Trennwand verläuft also in Aufsicht gesehen nicht geradlinig. Die Trennwand kann in Aufsicht gesehen eckig und/oder bogenförmig verlaufen.

Durch die Einbuchtung wird vermieden, dass ein Lebensmittel in einem Schacht seine Ausrichtung weitgehend ungehindert verändern kann. Durch die Einbuchtung soll also erreicht werden, dass die Lage des Lebensmittels sich möglichst nur in Transportrichtung verändert. Es wurde festgestellt, dass dadurch ein Lebensmittel besonders gleichmäßig zerkleinert werden kann. Stark variierende Zerkleinerungsergebnisse können also vermieden werden.

Die Trennwand kann in Aufsicht gesehen winkelförmig verlaufen. Der Grund der Einbuchtung wird dann durch einen Winkel gebildet. Vorteilhaft verläuft die Trennwand jedoch in Aufsicht gesehen bogenförmig, wodurch die Ausrichtung eines Lebensmittels unabhängig von seiner Größe im Schacht stabilisiert werden kann. Dies führt zu gleichmäßigen Schneidergebnissen.

In einer Ausgestaltung verläuft die Trennwand in Aufsicht gesehen kreisbogenförmig. Vorteilhaft ist die Trennwand in Aufsicht gesehen also ein Teilkreis, um weiter verbessert gleichmäßig zerkleinern zu können.

In einer Ausgestaltung schließt die Trennwand anfänglich mit zumindest einem Wandabschnitt des Schachts einen Winkel von 40° bis 80° ein. Ein solcher Winkel ist besonders gut geeignet, um die Ausrichtung auch von größeren Lebensmitteln während ihrer Zufuhr zur Schneidscheibe stabilisieren zu können. Vorzugsweise handelt es sich bei dem Wandabschnitt um einen außen liegenden Wandabschnitt, um weiter verbessert gleichmäßige Zerkleinerungsergebnisse gewährleisten zu können.

Grundsätzlich sind die Eintrittsöffnungen der Schächte unterschiedlich groß, um verbessert unterschiedlich große Lebensmittel stabil ausgerichtet der Schneidscheibe zuführen zu können.

In einer Ausgestaltung ist die Eintrittsöffnung des einen Schachts wenigstens 1,5mal so groß wie die Eintrittsöffnung des anderen Schachts, vorzugsweise wenigstens doppelt so groß, um unterschiedlich große Lebensmittel stabil ausgerichtet der Schneidscheibe zuführen zu können.

In einer Ausgestaltung verläuft der Zuführstutzen in Aufsicht gesehen oval, um unabhängig von der Drehrichtung der Schneidscheibe die Ausrichtung von Lebensmitteln und damit ein besonders gleichmäßiges Zerkleinerungsergebnis erreichen zu können.

Das Oval kann beispielsweise aus zwei Kreisbögen und zwei Geraden zusammengesetzt sein.

Vorteilhaft verlaufen die beiden Geraden des Ovals parallel, damit die Schächte gleichmäßig breit sind, was ein Einführen eines Lebensmittels in einen der beiden Schächte erleichtert.

Die beiden Kreisbögen sind vorzugsweise Halbkreise, um einen fließenden Übergang zu parallel verlaufenden Wänden des Ovals zu ermöglichen. Der Übergang ist dann frei von Kanten. Hierdurch lassen sich u.a. Reinigungsvorteile erzielen. Auch tragen Halbkreise dazu bei, unabhängig von der Drehrichtung der Schneidscheibe die Ausrichtung von Lebensmitteln während ihrer Zuführung besonders zuverlässig zu stabilisieren.

Das Oval kann ein Oval mit ein oder zwei Symmetrieachsen sein.

In einer Ausgestaltung gibt es einen Motor für ein Drehen der Schneidscheibe, um das Zerkleinern teilautomatisiert durchführen zu können.

In einer Ausgestaltung kann die Schneidscheibe sowohl im Uhrzeigersinn als auch gegen den Uhrzeigersinn durch den Motor gedreht werden. Dies ermöglicht es, in Abhängigkeit von der Drehrichtung unterschiedliche Zerkleinerungsergebnisse zu erzielen.

In einer Ausgestaltung umfasst die Schneidvorrichtung unterschiedliche Schneidelemente und/oder Reibelemente.

In einer Ausgestaltung sind die unterschiedlichen Schneidelemente und/oder Reibelemente unterschiedlich ausgerichtet, so dass in Abhängigkeit von der Drehrichtung verschiedene Zerkleinerungsergebnisse definiert erzielt werden können.

In einer Ausgestaltung stehen die unterschiedlichen Schneidelemente und/oder Reibelemente sowohl von der Unterseite als auch von der Oberseite der Schneidscheibe ab. Die Schneidelemente und/oder Reibelemente, die von der Unterseite abstehen, unterscheiden sich von den Schneidelementen und/oder Reibelementen, die von der Oberseite abstehen. Es kann ausgewählt werden, welche Seite dem Zuführstutzen zugewandt ist. Die Schneidscheibe lässt sich also auf zwei verschiedene Weisen montieren. In Abhängigkeit von der ausgewählten Seite lassen sich unterschiedliche Schneidergebnisse erzielen. Ist nämlich die Oberseite der Schneidscheibe dem Zuführstutzen zugewandt, so können nur die Schneidelemente und/oder Reibelemente zerkleinern, die von der Oberseite abstehen. Ist dagegen die Unterseite der Schneidscheibe dem Zuführstutzen zugewandt, so können nur die Schneidelemente und/oder Reibelemente zerkleinern, die von der Unterseite abstehen.

Es handelt sich in Bezug auf die unterschiedlichen Schneidelemente und/oder Reibelemente um eine eigenständige Erfindung, die unabhängig von der Einbuchtung der Trennwand ist und daher unabhängig von dieser Einbuchtung mit den vorgenannten Merkmalen kombiniert werden kann.

Um besonders einfach die Seite der Schneidscheibe auswählen zu können, die dem Zuführstutzen zugewandt sein soll, ist die Welle spiegelsymmetrisch, wobei die Schneidscheibe die Spiegelebene bildet. Zumindest steht die Welle von der Oberseite und der Unterseite der Schneidscheibe gleich weit ab. Umfasst die Welle an ihren Enden Kupplungselemente, so sind diese dann gleich. Der Montageaufwand für ein Montieren der Schneidscheibe wird so miniert. Es handelt sich hierbei um eine eigenständige Erfindung, die unabhängig von der Einbuchtung der Trennwand ist und daher unabhängig von dieser Einbuchtung mit den vorgenannten Merkmalen kombiniert werden kann.

In einer Ausgestaltung sind Schneidelemente und/oder Reibelemente so angeordnet oder ausgerichtet, dass diese ein Lebensmittel zentrifugal in Richtung benachbarter Außenseite der Schneidscheibe fördern. Es findet dann also keine Förderung parallel zur benachbarten Außenseite der Schneidscheibe statt. Dadurch gelingt eine Stabilisierung der Ausrichtung eines Lebensmittels während der Zerkleinerung, die unabhängig von der Einbuchtung der Trennwand Wirkung entfaltet und damit auch eine eigenständige Erfindung darstellt. Um eine Zentrifugalwirkung zu entfalten, kann eine Schneidkante in Schneidrichtung gesehen einen Winkel kleiner als 90°, vorzugsweise kleiner als 85°, besonders bevorzugt kleiner als 80°, mit der benachbarten Außenseite der Schneidscheibe einschließen. Alternativ oder ergänzend können außen liegende Schneidelemente nach hinten versetzt gegenüber innenliegenden Schneidelementen angeordnet sein und zwar in Schnittrichtung, um die gewünschte Zentrifugalwirkung zu erzielen. Alternativ oder ergänzend können Schneidelemente so in einer Reihe angeordnet sein, dass die Reihe in Schnittrichtung gesehen einen Winkel kleiner als 90° vorzugsweise kleiner als 85°, besonders bevorzugt kleiner als 80°, mit der benachbarten Außenseite einschließt, um so eine Zentrifugalwirkung zu erzielen.

In einer Ausgestaltung umfasst die Schneidvorrichtung ein Pressmittel, das in den Zuführstutzen eingeführt werden kann, um Lebensmittel durch die Schächte hindurchdrücken zu können. Das Pressmittel umfasst insbesondere zwei Stößel, die an der Oberseite miteinander unlösbar verbunden sein können. Das Pressmittel kann in einem Arbeitsschritt einstückig aus Kunststoff hergestellt worden sein.

Das Pressmittel kann vorzugsweise so in den Zuführstutzen eingeführt werden, dass das Pressmittel klemmend gehalten wird, wenn das Pressmittel vollständig in den Zuführstutzen eingeführt worden ist. Anfänglich gibt es vorteilhaft keine Klemmwirkung, damit das Pressmittel anfänglich leicht in den Zuführstutzen eingeführt werden kann. Das Pressmittel kann damit vorteilhaft nicht unplanmäßig aus dem Zuführstutzen herausfallen, sobald ein Lebensmittel in maximal möglicher Weise zerkleinert worden ist. Es handelt sich hierbei um eine eigenständige Erfindung, die unabhängig von der Einbuchtung der Trennwand ist und daher unabhängig von dieser Einbuchtung mit den vorgenannten Merkmalen kombiniert werden kann.

Eine Klemmwirkung kann dadurch erreicht werden, dass sich ein Schlitz zwischen zwei Stößeln des Pressmittels nach außen hin verbreitert und die Trennwand von dem Schlitz schließlich klemmend gehalten wird, wenn das Pressmittel vollständig in den Zuführstutzen eingeführt worden ist. Eine andere Möglichkeit besteht darin, dass sich ein Schacht so nach innen verjüngt, dass dieser einen Stößel klemmend hält, wenn das Pressmittel vollständig in den Zuführstutzen eingeführt worden ist.

In einer Ausgestaltung ist die Schneidvorrichtung ein Teil eines Küchengeräts oder ein Anbauteil für ein Küchengerät. Das Küchengerät ist insbesondere ein Speisenzubereitungsgerät, mit dem also eine Speise zubereitet werden kann.

Ein Speisenzubereitungsgerät ist ein elektrisches Gerät, also ein Gerät, das für seinen Betrieb elektrischen Strom benötigt. Ein Speisenzubereitungsgerät ist ein Gerät, mit dem zumindest ein Schritt einer Speisenzubereitung durchgeführt werden kann, wie zum Beispiel Mischen, Zerkleinern, Befeuchten, Trocknen, Kühlen oder Erhitzen. Durch das Speisenzubereitungsgerät kann also eine Speise oder zumindest eine Zutat einer Speise beispielsweise gemischt, zerkleinert, befeuchtet, getrocknet, gekühlt und/oder erhitzt werden. Eine Speise kann fest und/oder flüssig sein. Eine Speise kann nur ein Lebensmittel umfassen wie zum Beispiel nur Kartoffeln. Eine Speise kann aus verschiedenen Zutaten zusammengesetzt sein wie zum Beispiel Möhren, Erbsen, Zwiebeln, Salz und Pfeffer. Eine Speise kann eine Flüssigkeit umfassen wie zum Beispiel Wasser oder Öl.

Ein Speisenzubereitungsgerät umfasst ein Zubereitungsgefäß und grundsätzlich einen Deckel, der auf das Zubereitungsgefäß aufgesetzt werden kann. Im Zubereitungsgefäß kann ein drehbares Mischwerkzeug angeordnet sein. Das Speisenzubereitungsgerät kann die Schneidvorrichtung als Anbauteil aufweisen, das beispielsweise anstelle des Deckels auf das Zubereitungsgefäß aufgesetzt werden kann. Das Speisenzubereitungsgerät kann eine Verriegelungseinrichtung für ein Verriegeln des auf das Zubereitungsgefäß aufgesetzten Deckels und/oder für ein Verriegeln des auf das Zubereitungsgefäß aufgesetzten Anbauteils umfassen. Das Speisenzubereitungsgerät kann einen Sensor umfassen, der ausgelöst ist, wenn der aufgesetzte Deckel durch die Verriegelungseinrichtung und/oder durch das aufgesetzte Anbauteil verriegelt ist.

Zutaten einer Speise, die sich unmittelbar in dem Zubereitungsgefäß befinden, können beispielsweise durch das drehbare Mischwerkzeug zerkleinert werden. Das Mischwerkzeug kann sich zu diesem Zweck beispielsweise mit wenigstens 5000 oder wenigstens 8000 Umdrehungen pro Minute mithilfe eines Elektromotors drehen. Das Zubereitungsgefäß kann Heizelemente umfassen, um Zutaten einer Speise oder eine Speise in dem Zubereitungsgefäß erhitzen zu können. Das Speisenzubereitungsgerät kann aber auch Heizelemente für ein Erhitzen des Zubereitungsgefäßes umfassen, die getrennt von dem Zubereitungsgefäß vorhanden sind. Ein Basisteil des Speisenzubereitungsgeräts kann eine Aufnahme umfassen, die die Position des Zubereitungsgefäßes festlegen kann. Die Aufnahme kann eine gefäßartige Vertiefung sein, in die das Zubereitungsgefäß eingesetzt werden kann oder eingesetzt ist. Die Aufnahme kann eine Ablauföffnung umfassen, durch die vermieden wird, dass sich Flüssigkeit in der Aufnahme ansammeln kann. Insbesondere kann das Zubereitungsgefäß von der Ausnehmung abgenommen und so von dem Basisteil des Speisenzubereitungsgeräts getrennt werden.

Das Zubereitungsgefäß umfasst eine Öffnung. Der Deckel kann auf das Zubereitungsgefäß so aufgesetzt werden, dass die Öffnung dann durch den Deckel zumindest überwiegend, vorzugsweise vollständig, abgedeckt ist.

Das Anbauteil unterscheidet sich vom Deckel durch seine Funktion. Die Funktion des Deckels besteht darin, das Zubereitungsgefäß vollständig oder zumindest weitgehend vollständig verschließen zu können. Das Anbauteil trägt zumindest auch auf andere Weise zur Zubereitung einer Speise bei, da durch das Anbauteil ein Lebensmittel gleichmäßig und damit in definierter Weise zerkleinert werden kann. Das Anbauteil kann aber auch zugleich die Funktion eines Deckels übernehmen, also die Öffnung des Zubereitungsgefäßes zumindest überwiegend abdecken. Das Anbauteil ist also zugleich auch ein Deckel.

Ein Basisteil des Speisenzubereitungsgeräts kann die Verriegelungseinrichtung umfassen, die den Deckel sowie das Anbauteil im verriegelten Zustand unlösbar mit dem Zubereitungsgefäß verbinden kann. Ist das Speisenzubereitungsgerät so beschaffen, dass das Zubereitungsgefäß von dem Basisteil gelöst werden kann, so setzt dann das erfindungsgemäße Aufsetzen des Deckels bzw. das Aufsetzen des Anbauteils auf das Zubereitungsgefäß voraus, dass das Zubereitungsgefäß in das Basisteil eingesetzt ist. Das Zubereitungsgefäß ist dann beispielsweise in eine Aufnahme des Basisteils eingesetzt.

Das Basisteil kann eine Steuerungseinrichtung, einen elektrischen Antrieb, einen Sensor, einen Schalter und/oder ein Display umfassen.

Durch die Erfindung können Lebensmittel sehr gleichmäßig zerkleinert werden, was durch die eingebuchtete Trennwand erreicht wird und/oder durch die beschriebene Zentrifugalwirkung. Noppen beim Pressmittel unterstützen die stabile Ausrichtung und tragen damit ergänzend zur gleichmäßigen Zerkleinerung bei. Durch zwei unterschiedlich große Schächte können unterschiedlich große Lebensmittel stabil ausgerichtet zugeführt und damit besonders gleichmäßig zerkleinert werden. Vier verschiedene Schneidelemente ermöglichen vier verschiedene Zerkleinerungsergebnisse mit nur einer Schneidscheibe. Die Zahl der benötigten Bauteile ist gering.

Die Erfindung betrifft außerdem ein Bauteil mit einem Zuführstutzen. Der Zuführstutzen umfasst zwei Schächte, die durch eine Trennwand voneinander getrennt sind. Über einen jeden Schacht kann ein Lebensmittel zu einer Schneidscheibe geführt werden. Die Trennwand umfasst in Aufsicht gesehen eine Einbuchtung. Das Bauteil kann eine Abdeckung sein. Das Bauteil kann wie zuvor beschrieben ausgestaltet sein. Das Bauteil kann Merkmale der nachfolgend beschriebenen Abdeckung einzeln oder in Kombination umfassen.

Nachfolgend wird die Erfindung anhand von Figuren näher erläutert. Nachfolgend genannte Merkmale können einzeln oder in einer Mehrzahl mit den beanspruchten Gegenständen kombiniert werden, sofern nichts Gegenteiliges angegeben wird. Die beanspruchten Schutzbereiche sind nicht auf die Ausführungsbeispiele beschränkt.

Es zeigen:
- Figur 1:: Pressmittel einer Schneidvorrichtung;
- Figur 2:: Abdeckung mit Zuführstutzen der Schneidvorrichtung;
- Figur 3:: Abdeckung mit Zuführstutzen und Pressmittel
- Figur 4:: Aufsicht auf Abdeckung und Zuführstutzen
- Figur 5:: Schneidscheibe mit Zentrifugalwirkung;
- Figur 6:: Behälter der Schneidvorrichtung;
- Figur 7:: Welle der Schneidvorrichtung;
- Figur 8:: Küchenmaschine mit Deckelteil;
- Figur 9:: Küchenmaschine mit Innenansicht in das Zubereitungsgefäß;
- Figur 10:: Küchenmaschine mit Schneidvorrichtung;
- Figur 11:: Aufsicht auf Abdeckung bei Drehung der Schneidscheibe im Uhrzeigersinn;
- Figur 12:: Aufsicht auf Abdeckung bei Drehung der Schneidscheibe gegen den Uhrzeigersinn;
- Figur 13:: Abdeckung mit Zuführstutzen gemäß einer weiteren Ausführungsform;
- Figur 14:: Abdeckung mit Zuführstutzen gemäß einer weiteren Ausführungsform;
- Figur 15:: Schneidscheibe ohne Zentrifugalwirkung.

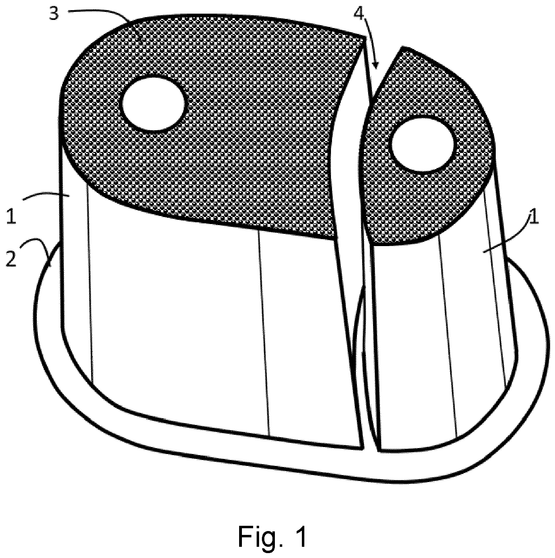

Die Figur 1 zeigt ein Pressmittel und zwar eine Aufsicht auf die Unterseite von zwei Stößeln 1 des Pressmittels. Die beiden Stößel 1 sind an ihrer Oberseite durch einen umlaufenden Rand 2 fest miteinander verbunden. Der Rand 2 steht seitlich ab. Ein jeder Stößel 1 kann zugleich als Gefäß ausgebildet sein, so zum Beispiel als Messbecher. Der Grund von einem oder zwei Stößeln 1 kann jeweils eine Öffnung aufweisen. Ein gefäßartig ausgebildeter Stößel 1 mit einer Öffnung im Grund kann dann dazu genutzt werden, um über den Stößel 1 eine Flüssigkeit zuführen zu können. An der Unterseite können beide Stößel 1 vorstehende Noppen 3 aufweisen, die ein Lebensmittel fixieren sollen. Die Noppen 3 können beispielsweise kegelförmig nach außen spitz zulaufen, um ein Lebensmittel während der Zuführung schlupffrei halten und damit die Ausrichtung während der Zuführung stabilisieren zu können. Zwischen den beiden Stößeln 1 ist wie in der Figur 1 gezeigt ein Spalt 4 vorhanden, der in Aufsicht gesehen bogenförmig verläuft und daher eine Einbuchtung aufweist. Der Spalt 4 weitet sich nach außen hin auf, also im Fall der Figur 1 nach oben hin.

Die beiden Stößel 1 sind in Aufsicht gesehen unterschiedlich geformt und unterschiedlich groß. Die Höhe der beiden Stößel 1 ist gleich.

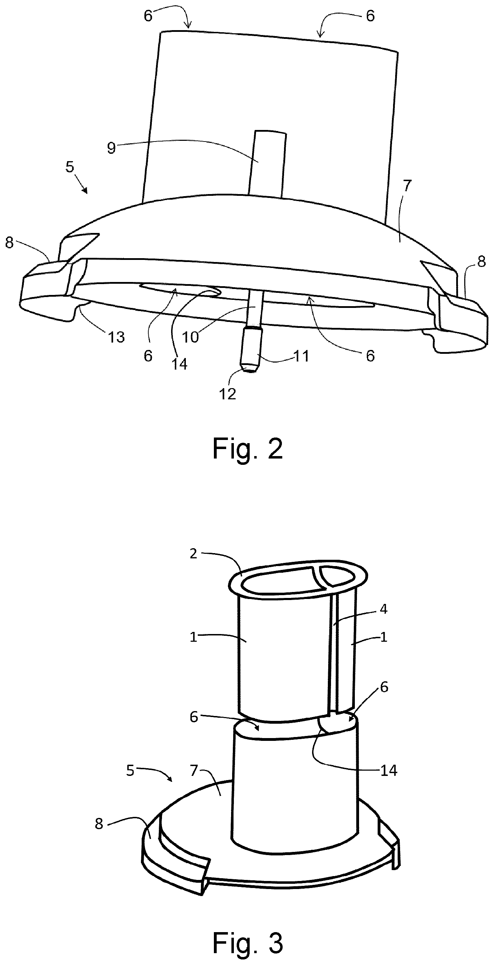

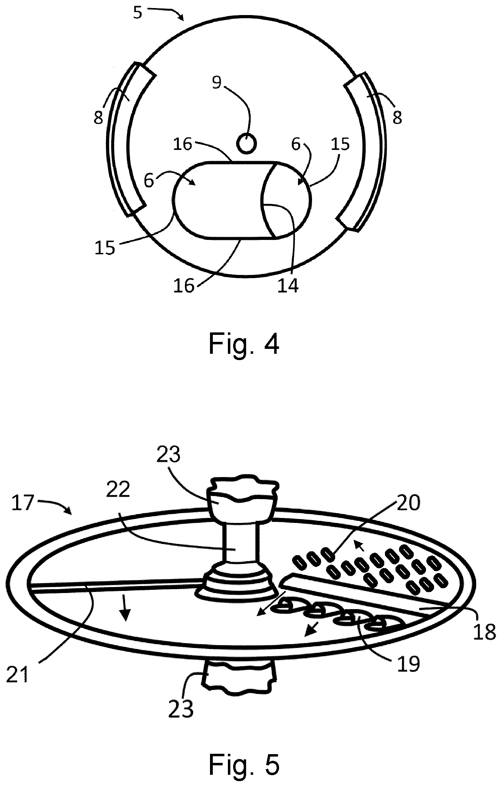

In der Figur 2 wird eine Abdeckung 5 der Schneidvorrichtung gezeigt. Die Abdeckung 5 umfasst zwei Schächte 6, die durch einen nach oben abstehenden Zuführstutzen mit einer inneren Trennwand 14 gebildet werden. Die Abdeckung 5 ist also ein Beispiel für Bauteil mit einem Zuführstutzen. Die Schächte 6 sind so an die beiden Stößel 1 angepasst, dass die Stößel 1 in die beiden Schächte 6 hineingesteckt werden können. Durch den seitlich abstehenden Rand 2 wird verhindert, dass die Stößel 1 durch die Schächte 6 hindurch fallen können. Mithilfe der Stößel 1 kann eine Speise oder eine Zutat einer Speise durch die Schächte 6 hindurch gegen eine in der Figur 4 gezeigte Schneidscheibe mit Schneidelementen gepresst werden.

Die Schächte 6 bzw. der Zuführstutzen sind an ihrer Unterseite mit einer gewölbten Kappe 7 verbunden und zwar in einem randseitigen Bereich der Kappe 7. An der Unterseite der Kappe 7 sind an zwei gegenüberliegenden Seiten teilkreisförmige Stufen 8 vorhanden. Die beiden teilkreisförmigen Stufen 8 stehen seitlich sowie nach unten von der Kappe 7 ab.

Ein Dorn 9 steht nach oben von der Kappe 7 ab und zwar in etwa von der Mitte der Kappe 7. Durch den Dorn 9 wird eine nach unten gegenüber der Kappe 7 vorstehender Stab 10 gehalten. Der Außendurchmesser des Dorns 9 ist aus Stabilitätsgründen größer als der maximale Außendurchmesser des Stabs 10. Der Stab 10 kann an seinem freien Ende eine zylinderförmige Verdickung 11 mit einem sich verjüngenden freien Ende 12 aufweisen. Die Unterseite der Stufen 8 kann als Hakenform 13 ausgebildet sein.

In der Figur 3 wird eine gegenüber der Figur 2 gedrehte Ansicht der Abdeckung 5 gezeigt und außerdem das Pressmittel mit den beiden Stößeln 1, die sich einführbereit oberhalb der beiden Schächte 6 befinden. Die beiden Schächte 6 sind durch die Trennwand 14 getrennt, die in Aufsicht bogenförmig und zwar teilkreisförmig verläuft.

Werden die beiden Stößel 1 in die Schächte 6 hineingesteckt, so wird das Pressmittel in der Endposition klemmend gehalten. Dies wird erreicht, weil sich die Breite des Spalts 4 in Richtung umlaufenden Rand 2 hin verjüngt und die Dicke der Trennwand 14 so gewählt ist, dass die Trennwand schließlich kraftschlüssig durch den Spalt 4 gehalten werden kann. Der Kraftschluss ist dabei gerade so groß, dass der Zuführstutzen nicht aus der Abdeckung 5 herausfallen kann, wenn die Abdeckung 5 herumgedreht wird. Wird die Abdeckung 5 nach einem Zerkleinern gelöst, so kann das Pressmittel dann vorteilhaft nicht unplanmäßig aus den Schächten 6 herausfallen. Das Herstellen der verjüngenden Form ist durch Spritzguss möglich und zwar auch unter Ausnutzung von Verzug, der bei der Spritzgussherstellung auftreten kann. Es kann aber auch im Anschluss an eine Spritzgussherstellung noch eine geeignete Verjüngung hergestellt werden.

In der Figur 3 ist zu erkennen, dass die beiden Stößel 1 an der Oberseite Öffnungen aufweisen und folglich jeweils als Gefäß ausgestaltet sind, wenn der Grund der Stößel 1 verschlossen ist.

In der Figur 4 wird eine Aufsicht auf die Abdeckung 5 gezeigt, die den teilkreisförmigen Verlauf der Trennwand 14 zeigt. Außerdem ist zu erkennen, dass der ovale Zuführstutzen aus zwei halbkreisförmigen Stirnseiten 15 und zwei parallelen Wänden 16 gebildet ist. Die teilkreisförmige Trennwand 14 grenzt an die teilkreisförmige Stirnseite 15 an. Dadurch gibt es einen in Aufsicht gesehenen großen Schacht 6 und einen in Aufsicht gesehen sehr viel kleineren Schacht 6. Die Eintrittsöffnung des großen Schachts 6 kann wenigstens doppelt so groß sein wie die Eintrittsöffnung des kleinen Schachts 6, um unterschiedlich große Lebensmittel geeignet zuführen zu können.

In der Figur 5 wird eine Schneidscheibe 17 der Schneidvorrichtung gezeigt. Auf der Unterseite beim Schlitz 18 gibt es eine parallel zum Schlitz 18 verlaufende Klinge. Die Schnittrichtung der Klinge wird durch einen Pfeil angedeutet. Die Klinge beim Schlitz 18 steht nach unten von der Schneidscheibe 17 ab. Der Schlitz 18 und damit auch die Schneidkante der Klinge schließen in Schnittrichtung gesehen mit dem Außenrand der Schneidscheibe 17 einen Winkel kleiner als 90° ein. Dadurch wird erreicht, dass ein zu zerkleinerndes Lebensmittel während des Zerkleinerns verstärkt in Richtung äußeren Rand der Schneidscheibe 17 gefördert wird. Die nach unten abstehende Klinge wirkt also durch ihre Anordnung zentrifugal auf ein Lebensmittel ein, wenn die nach unten abstehende Klinge ein Lebensmittel zerkleinert.

Es gibt haubenförmige Schneidelemente 19 mit einer bogenförmigen Klinge für ein Schneiden von Streifen. Die haubenförmigen Schneidelemente 19 stehen nach oben von der Schneidscheibe 17 ab. Unterhalb einem jeden haubenförmigen Schneidelement 19 gibt es ein durch die Schneidscheibe hindurchführendes Loch, welches von einem zerkleinerten Lebensmittel passiert wird. In der Figur 5 werden beispielhaft vier solcher haubenförmigen Schneidelemente 19 gezeigt. Die haubenförmigen Schneidelemente 19 sind wie in der Figur 5 gezeigt so in einer Reihe angeordnet, dass diese Reihe mit dem Außenrand einen Winkel kleiner als 90° einschließt. Dadurch wird ein zu zerkleinerndes Lebensmittel während des Zerkleinerns verstärkt wie durch einen Pfeil angedeutet in Richtung Außenrand gefördert. Die nach oben abstehenden Schneidelemente 19 wirken also durch ihre Anordnung zentrifugal auf ein Lebensmittel ein, wenn die nach oben abstehenden Schneidelemente 19 ein Lebensmittel zerkleinern.

Es gibt weiter eine Mehrzahl von Löchern 20. Es können beispielsweise wie in der Figur 5 gezeigt 17 solcher Löcher 20 vorhanden sein. Unterhalb einem jeden Loch 20 gibt es ein haubenförmiges Schneidelement, das nach unten von der Schneidscheibe 17 absteht. Die Schnittrichtung der nach unten abstehenden bogenförmigen Schneidelemente ist durch einen Pfeil angedeutet. Die Anordnung der Löcher 20 ist so, dass es in Schnittrichtung gesehen Löcher 20 beim Außenrand gibt, die gegenüber Löchern bei der Welle 22 nach hinten versetzt sind. Dadurch wird erreicht, dass ein zu zerkleinerndes Lebensmittel während des Zerkleinerns verstärkt in Richtung äußeren Rand der Schneidscheibe 17 gefördert wird. Ergänzend sind Löcher 20 so nebeneinander angeordnet, dass eine dadurch gebildete Reihe wie in der Figur 5 zu sehen einen Winkel kleiner als 90° mit dem äußeren Rand der Schneidscheibe 17 einschließt. Dadurch wird ergänzend erreicht, dass ein zu zerkleinerndes Lebensmittel während des Zerkleinerns verstärkt in Richtung äußeren Rand der Schneidscheibe 17 gefördert wird. Die nach unten abstehenden Schneidelemente wirken also durch ihre Anordnung und Ausrichtung zentrifugal auf ein Lebensmittel ein, wenn die nach unten abstehenden Schneidelemente ein Lebensmittel zerkleinern.

Die haubenförmigen Schneidelemente, die nach unten von der Schneidscheibe 17 abstehen, sind kleiner als die haubenförmigen Schneidelemente 19, die nach oben von der Schneidscheibe 17 abstehen. Damit können unterschiedlich große Streifen aus einem Lebensmittel herausgeschnitten werden.

Die Schneidscheibe 17 umfasst eine Klinge 21, die schräg nach oben von der Schneidscheibe 17 absteht. Die Schnittrichtung ist durch einen Pfeil angedeutet. Unterhalb der Klinge 21 gibt es einen Schlitz, der von zerkleinertem Lebensmittel passiert wird. Die Klinge 21 schließt in Schneidrichtung gesehen mit dem Außenrand der Schneidscheibe 17 einen Winkel ein, der kleiner als 90° ist. Dadurch wird ein zu zerkleinerndes Lebensmittel während des Zerkleinerns verstärkt in Richtung Außenrand gefördert. Die nach oben abstehende Klinge 21 wirkt also durch ihre Anordnung zentrifugal auf ein Lebensmittel ein, wenn die nach oben abstehende Klinge 21 ein Lebensmittel zerkleinert. Die Klinge 21 steht von der Schneidscheibe 17 weiter nach oben ab als die Klinge, die nach unten von dem Schlitz 18 absteht. Dadurch können durch die Klinge 21 dickere Scheiben geschnitten werden als durch die nach unten abstehende Klinge.

Enden die Schächte 6 auf der in der Figur 5 gezeigten Oberseite der Schneidscheibe 17, so können die haubenförmigen Schneidelemente 19 und die Klinge 21 zugeführte Lebensmittel zerschneiden. Die Schnittrichtungen der Klinge 21 und der haubenförmigen Schneidelemente 19 sind entgegengesetzt ausgerichtet. Die haubenförmigen Schneidelemente 19 zerkleinern ein zugeführtes Lebensmittel streifenförmig, wenn die Schneidscheibe 17 im Uhrzeigersinn gedreht wird. Die Klinge 21 zerkleinert ein zugeführtes Lebensmittel scheibenförmig, wenn die Schneidscheibe 17 entgegengesetzt zum Uhrzeigersinn gedreht wird. In Abhängigkeit von der Drehrichtung der Schneidscheibe 17 kann ein zugeführtes Lebensmittel also entweder durch die Klinge 21 scheibenförmig oder die Schneidelemente 19 streifenförmig zerkleinert werden. Durch die Zerkleinerung passiert das zerkleinerte Lebensmittel den Schlitz unterhalb der Klinge 21 bzw. die Löcher unterhalb der bogenförmigen Schneidelemente 19 und damit die Schneidscheibe 17, fällt nach unten und wird nicht weiter durch die Schneidvorrichtung zerkleinert.

An der Schneidscheibe 17 ist eine Welle 22 lösbar befestigt. Die Welle 22 ist schaftförmig, zumindest teilweise hohl und weist an ihren Enden kranzförmige Kupplungselemente 23 auf. Der oben genannte Stab 10 kann durch das obere Kupplungselement 23 hindurch in den Schaft der Welle 22 hineingesteckt werden. Dies stabilisiert die Lage der Welle 22 während des Betriebs im zusammengesetzten Zustand der Schneidvorrichtung. Die Kupplungselemente 23 sind gleich geformt. Die Welle 22 steht von beiden Seiten der Schneidscheibe 17 gleich weit ab. Die Schneidscheibe kann daher auch um 180° gedreht so montiert werden, dass die Schächte 6 dann bei der in der Figur 5 gezeigten unteren Seite einmünden. In diesem Fall können die nach unten abstehende Klinge bzw. die nach unten abstehenden haubenförmigen Schneidelemente ein Lebensmittel im Prinzip wie zuvor beschrieben zerkleinern, nicht aber die im Fall der Figur 5 nach oben abstehende Klinge 21 oder die im Fall der Figur 5 nach oben abstehenden haubenförmigen Schneidelemente 19.

Die beschriebene zentrifugale Wirkung trägt dazu bei, dass die Ausrichtung eines Lebensmittels während der Zuführung stabilisiert wird.

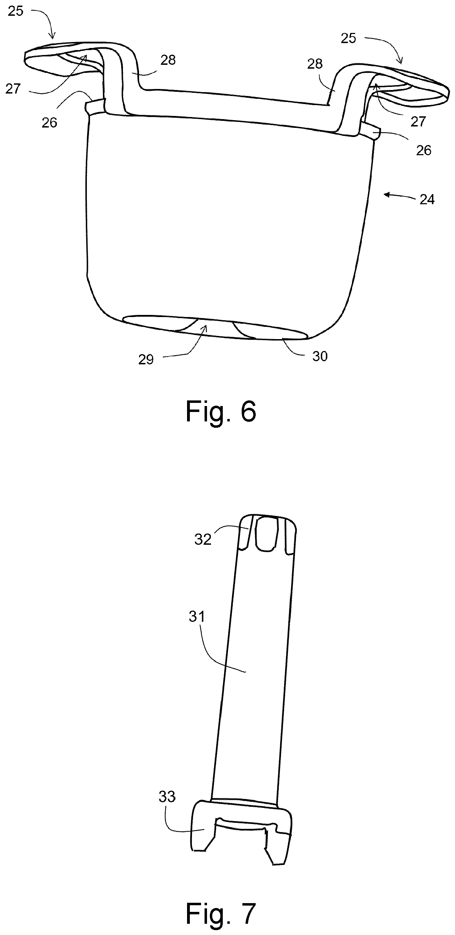

Die Figur 6 zeigt einen Behälter 24 der Schneidvorrichtung, in dem ein zerkleinertes Lebensmittel nach Passieren der Schneidscheibe 17 aufgefangen wird. An der Oberseite des Behälters 24 gibt es zwei gegenüberliegende Griffe 25. Die beiden Griffe 25 erstrecken sich von oberen Randabschnitten 26 des Behälters 24 zunächst nach oben und dann nach außen zur Seite. Ein jeder Griff 25 bildet so eine Öffnung 27. In die Öffnungen 27 können die oben genannten Stufen 8 eingesetzt werden. Die Unterseiten der Stufen 8 sitzen dann auf den Randabschnitten 26 auf. Die nach oben weisenden Stege 28 der Griffe 25 verhindern dann ein seitliches Verrutschen der Abdeckung 5 mit der Kappe 7 und tragen zu einer Positionierung der Abdeckung 5 bei. Die Hakenformen 13 der Unterseiten können dann die Randabschnitte 26 umgreifen und so ergänzend dazu beitragen, dass die Abdeckung 7 relativ zum Behälter 24 positioniert und ein seitliches Verrutschen verhindert wird.

Der Boden 30 des Behälters 24 weist eine trichterförmige Öffnung 29 auf, die in einen hohlen Schaft einmündet.

In der Figur 7 wird eine Welle 31 gezeigt, die durch die trichterförmige Öffnung 29 und den sich daran anschließenden hohlen Schaft hindurch gesteckt werden kann. Das obere Ende der Welle 31 weist ein Kupplungselement 32 auf, das in das untere Kupplungselement 23 der Schneidscheibe 17 eingesetzt werden kann. Die äußere Kontur des Kupplungselements 32 korrespondiert mit der inneren Kontur des Kupplungselements 23. Dadurch wird erreicht, dass die beiden Kupplungselemente drehfest miteinander verbunden sind, wenn das Kupplungselement 32 in das Kupplungselement 23 eingesetzt ist.

Die Welle 31 weist ein unteres Kupplungselement 33 auf. Das untere Kupplungselement 33 kann so auf ein Mischwerkzeug im Inneren eines Zubereitungsgefäßes einer Küchenmaschine aufgesetzt werden, dass das Kupplungselement 33 drehfest mit dem Mischwerkzeug verbunden ist. Ein Drehen des Mischwerkzeugs hat dann zur Folge, dass auch die Schneidscheibe 17 gedreht wird, wenn die Welle 31 drehfest mit der Schneidscheibe 17 verbunden ist.

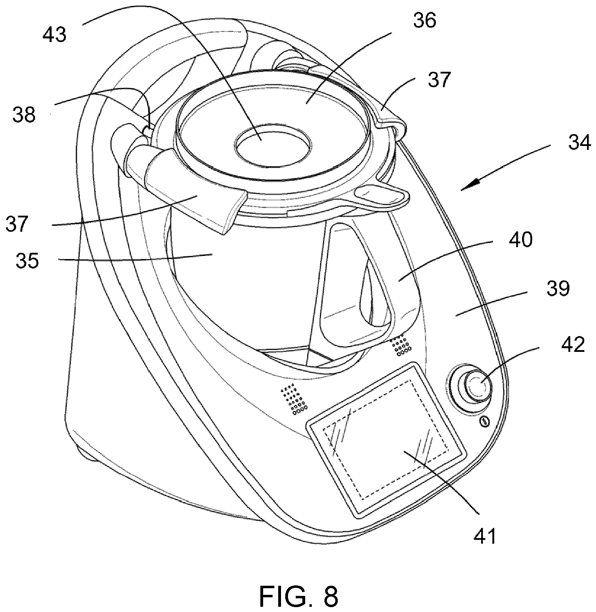

Die Figur 8 zeigt ein Speisenzubereitungsgerät und zwar eine Küchenmaschine 34 mit einem Zubereitungsgefäß 35. Auf dem Zubereitungsgefäß 35 ist ein Deckelteil 36 aufgesetzt. Das Deckelteil 36 für das Zubereitungsgefäß 35 ist durch armartige Verriegelungselemente, also Arme 37, verriegelt. Das Deckelteil 36 befindet sich zwischen den beiden Armen 37. Die Arme 37 können um ihre Längsachse motorisiert gedreht werden und so hin und her zwischen einer Öffnungsstellung und einer Verriegelungsstellung. Das Deckelteil 36 hat einen Sensor und zwar einen Kipphebel 38 eines elektrischen Schalters heruntergedrückt und so ausgelöst. Die armartigen Verriegelungselemente 37 und der Kipphebel 38 sind an einem Basisteil 39 der Küchenmaschine 34 angebracht. Das Zubereitungsgefäß 35 ist in das Basisteil 39 eingesetzt und kann aus dem Basisteil 39 herausgenommen werden. Um das Zubereitungsgefäß 35 herausnehmen zu können, umfasst dieses einen Griff 40. Das Basisteil 39 umfasst zur Bedienung ein Display 41 und einen Drehschalter 42. Das Deckelteil 36 umfasst mittig eine Öffnung 43, die mit einem gefäßartigen Verschluss verschlossen werden kann. Durch den ausgelösten Kipphebel 38 hat die Steuerungseinheit der Küchenmaschine 34 die Information erhalten, dass das Deckelteil 36 ordnungsgemäß aufgesetzt und verriegelt ist. Eine Information über den Zustand des nicht gezeigten gefäßartigen Verschlusses hat die Steuerungseinheit der Küchenmaschine 34 allerdings nicht erhalten können.

Werden die armartigen Verriegelungselemente 37 in ihre Öffnungsstellung gedreht, so wird dadurch der Kipphebel 38 durch Federkraft nach oben in seine nicht ausgelöste Stellung bewegt. Diese Bewegung des Kipphebels 38 hebt das Deckelteil 36 entsprechend an. Das Deckelteil 36 ist dann zwar auf dem Kipphebel 38 aufgesetzt, aber nicht verriegelt.

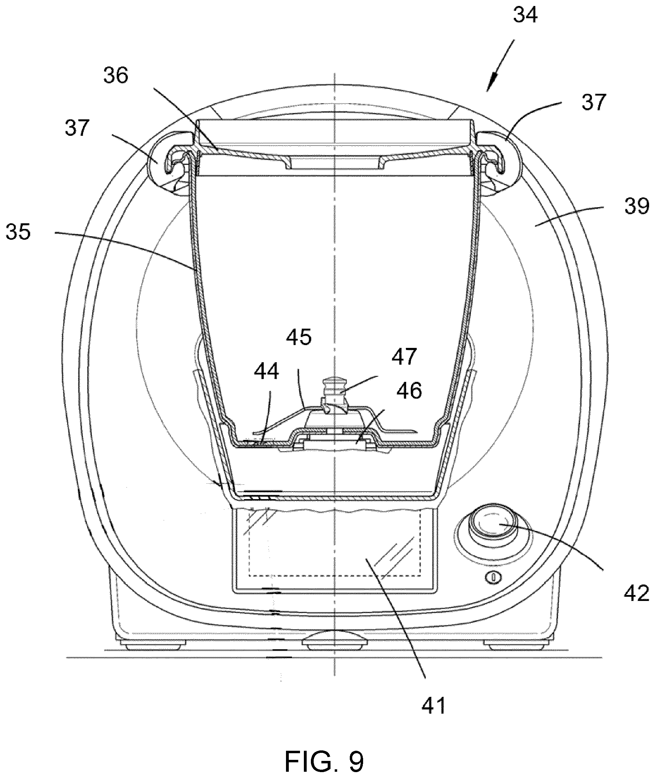

Die Figur 9 zeigt die Küchenmaschine 34 aus der Figur 8. Der Bereich des Zubereitungsgefäßes 35 ist aufgeschnitten gezeigt, sodass das Innenleben sichtbar ist. Am Grund 44 des Zubereitungsgefäßes 35 befindet sich ein drehbares Mischwerkzeug 45. Das Mischwerkzeug 45 wird durch einen Welle 47 angetrieben, die durch den Grund 44 des Zubereitungsgefäßes 35 hindurchgeführt ist. Die Welle 47 ist mit einem unteren Kupplungselement in ein Kupplungselement 46 des Basisteils 39 eingesetzt und dadurch drehfest verbunden. Das Kupplungselement 46 ist mit der Welle eines elektrischen Motors verbunden, der sich im Basisteil 39 befindet. Über den elektrischen Motor im Basisteil 39 kann das Mischwerkzeug 45 gedreht werden.

Wird das in der Figur 9 links oben gezeigte Verriegelungselement 37 entgegengesetzt zum Uhrzeigersinn gedreht und das rechts oben gezeigte Verriegelungselement 37 im Uhrzeigersinn, so wird die Verriegelung gelöst und das Deckelteil 36 kann vom Zubereitungsgefäß 35 abgenommen werden.

Das in der Figur 7 gezeigte Kupplungselement 33 kann auf die Welle 47 so aufgesetzt werden, dass eine drehfeste Verbindung zwischen dem Mischwerkzeug 45 und dem Kupplungselement 33 hergestellt wird.

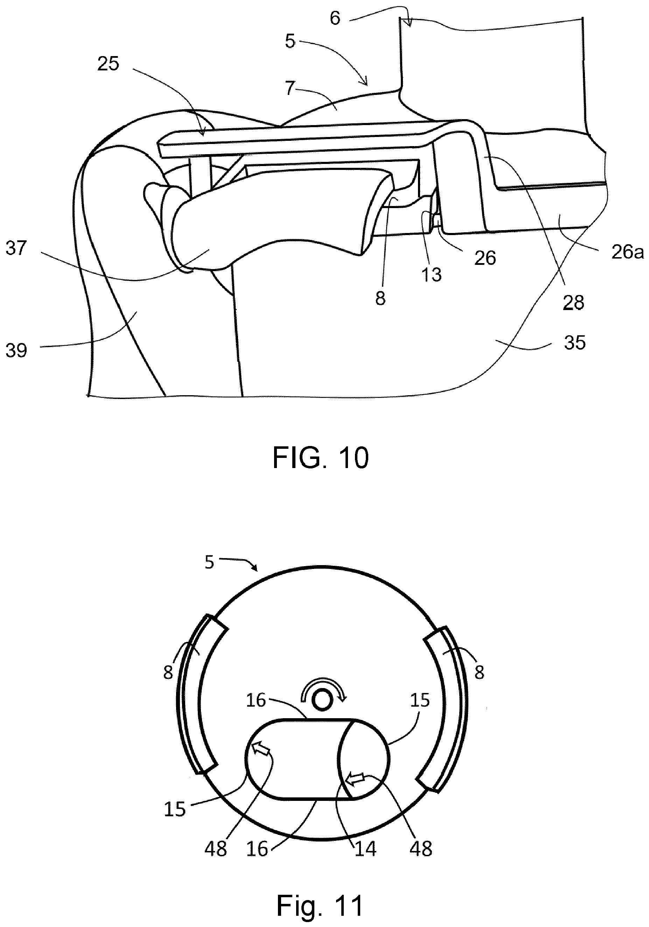

Anstelle des Deckelteils 36 kann die Schneidvorrichtung auf das Zubereitungsgefäß 35 aufgesetzt werden. Dies wird in der Figur 10 in der verriegelten Stellung ausschnittsweise gezeigt. Das Verriegelungselement 37 liegt so auf der Stufe 8 der Abdeckung 5 auf, dass dadurch die Abdeckung 5 nicht mehr vom Zubereitungsgefäß 35 gelöst werden kann. Die Abdeckung 5 liegt auf dem oberen Rand 26 des Gefäßes 24 auf. Dadurch kann das Gefäß 24 nicht aus dem Zubereitungsgefäß 35 herausgenommen werden. Der Kipphebel 38 wird durch einen seitlich abstehenden Randabschnitt 26a des Gefäßes 24 betätigt.

Ist die Schneidvorrichtung auf das Zubereitungsgefäß 35 aufgesetzt und dreht sich die Schneidscheibe 17 wie in der Figur 11 durch einen Pfeil angedeutet im Uhrzeigersinn, so werden Lebensmittel 48 wie angedeutet gegen die Trennwand 14 bzw. gegen die Stirnwand 15 gedrückt und durch den gewölbten Verlauf gehalten. Die Ausrichtung des jeweiligen Lebensmittels 48 wird dadurch stabilisiert. Es werden dadurch sehr gleichmäßige Zerkleinerungsergebnisse erzielt.

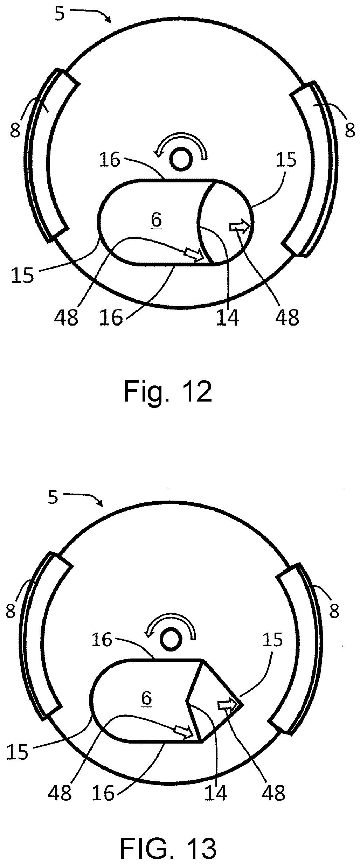

In der Figur 12 wird gezeigt, wie Lebensmittel 48 gehalten werden und deren Ausrichtung stabilisiert wird, wenn die Schneidscheibe 17 entgegengesetzt zum Uhrzeigersinn gedreht wird. Lebensmittel, die durch den links gezeigten Schacht 6 zur Schneidscheibe 17 geführt werden, werden wie angedeutet durch den Winkel gehalten, der durch die Trennwand 14 und der Wand 16 bei der Außenseite der Abdeckung 5 gebildet wird. Dieser Winkel ist vorzugsweise 40° bis 80° groß.

Unabhängig von der Drehrichtung und unabhängig von dem Schacht können Lebensmittel also stets stabil ausgerichtet der Schneidscheibe 17 für ein Zerkleinern zugeführt werden.

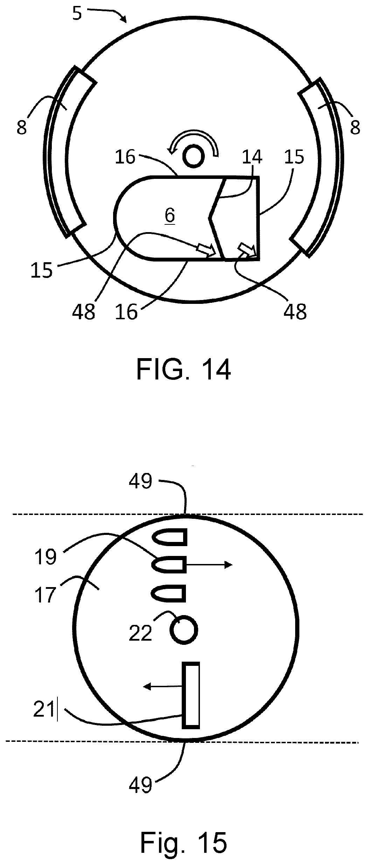

Die Figur 14 verdeutlicht, dass auch mit der rechts gezeigten, geradlinig verlaufenden Stirnwand 15 die Lage eines Lebensmittels 48 stabilisiert werden kann, sodass sich gleichmäßige Zerkleinerungsergebnisse auch mit einer solchen Stirnwand 15 erzielen lassen. Bessere Ergebnisse werden allerding mit einer bogenförmigen Stirnwand 15 erzielt.

In der Figur 15 wird ein Beispiel gezeigt, bei dem Schneidelemente 19, 21 so angeordnet und ausgerichtet sind, dass diese ein Lebensmittel nicht zentrifugal in Richtung benachbarter Außenseite 49 der Schneidscheibe 17 fördern. Es findet stattdessen in Schnittrichtung eine Förderung parallel zur benachbarten Außenseite 49 der Schneidscheibe 17 statt, wie dies durch Pfeile angedeutet wird.

## Patentansprüche

1. Schneidvorrichtung für eine Zerkleinerung von Lebensmitteln mit einer Schneidscheibe (17) mit Reib- und/oder Schneidelementen (18, 19,20), mit einer Welle (22) für die Schneidscheibe (17), wobei die Schneidscheibe (17) an der Welle (22) befestigt ist oder lösbar an der Welle (22) befestigt werden kann, mit einem Zuführstutzen, über den Lebensmittel zur Schneidscheibe (17) geführt werden können, wobei der Zuführstutzen zwei Schächte (6) umfasst, die durch eine Trennwand (14) voneinander getrennt sind, wobei über einen jeden Schacht (6) ein Lebensmittel (48) zur Schneidscheibe (17) geführt werden kann, **dadurch gekennzeichnet, dass** die Trennwand (14) in Aufsicht gesehen eine Einbuchtung umfasst.

2. Schneidvorrichtung nach dem vorhergehenden Anspruch, **dadurch gekennzeichnet, dass** die Trennwand (14) in Aufsicht gesehen bogenförmig verläuft.

3. Schneidvorrichtung nach einem der vorhergehenden Ansprüche, **dadurch gekennzeichnet, dass** die Trennwand (14) anfänglich mit zumindest einem Wandabschnitt des Schachts (6) einen Winkel von 40° bis 80° einschließt.

4. Schneidvorrichtung nach einem der vorhergehenden Ansprüche, **dadurch gekennzeichnet, dass** die Eintrittsöffnungen der Schächte (6) unterschiedlich groß sind.

5. Schneidvorrichtung nach einem der vorhergehenden Ansprüche, **dadurch gekennzeichnet, dass** die Schneidscheibe (17) durch einen Motor der Schneidvorrichtung sowohl im Uhrzeigersinn als auch gegen den Uhrzeigersinn gedreht werden kann.

6. Schneidvorrichtung nach einem der vorhergehenden Ansprüche, **dadurch gekennzeichnet, dass** die Schneidscheibe (17) zumindest zwei, vorzugsweise zumindest vier, unterschiedliche Schneidelemente (18, 19, 20, 21) und/oder unterschiedliche Reibelemente umfasst.

7. Schneidvorrichtung nach dem vorhergehenden Anspruch, **dadurch gekennzeichnet, dass** die unterschiedlichen Schneidelemente (18, 19, 20, 21) unterschiedlich ausgerichtet sind, so dass in Abhängigkeit von der Drehrichtung verschiedene Zerkleinerungsergebnisse definiert erzielt werden können.

8. Schneidvorrichtung nach einem der beiden vorhergehenden Ansprüche, **dadurch gekennzeichnet, dass** die Schneidelemente (18, 19, 20, 21) und/oder Reibelemente sowohl von der Unterseite als auch von der Oberseite der Schneidscheibe abstehen und ausgewählt werden kann, welche Seite der Schneidscheibe (17) dem Zuführstutzen zugewandt ist, so dass in Abhängigkeit von der ausgewählten Seite verschiedene Zerkleinerungsergebnisse definiert erzielt werden können.

9. Schneidvorrichtung nach einem der beiden vorhergehenden Ansprüche, **dadurch gekennzeichnet, dass** die Welle (22) von der Oberseite und der Unterseite der Schneidscheibe (17) gleich weit absteht.

10. Schneidvorrichtung nach dem vorhergehenden Anspruch, **dadurch gekennzeichnet, dass** die Welle (22) an ihren Enden gleiche Kupplungselemente (23) umfasst.

11. Schneidvorrichtung nach einem der vorhergehenden Ansprüche, **dadurch gekennzeichnet, dass** Schneidelemente (18, 19, 20, 21) und/oder Reibelemente der Schneidscheibe (17) so angeordnet oder ausgerichtet sind, dass diese ein Lebensmittel zentrifugal in Richtung benachbarter Außenseite der Schneidscheibe fördern.

12. Schneidvorrichtung nach einem der vorhergehenden Ansprüche, **dadurch gekennzeichnet, dass** diese ein Pressmittel umfasst, das in den Zuführstutzen so eingeführt werden kann, dass das Pressmittel klemmend gehalten wird und/ oder dass das Pressmittel Stößel (1) umfasst, die an ihrer Unterseite Noppen (3) aufweisen.

13. Bauteil (5) mit einem Zuführstutzen, über den Lebensmittel zur Schneidscheibe (17) einer Schneidvorrichtung nach einem der vorhergehenden Ansprüche geführt werden können, wobei der Zuführstutzen zwei Schächte (6) umfasst, die durch eine Trennwand (14) voneinander getrennt sind, wobei über einen jeden Schacht (6) ein Lebensmittel (48) zur Schneidscheibe (17) geführt werden kann, **dadurch gekennzeichnet, dass** die Trennwand (14) in Aufsicht gesehen eine Einbuchtung umfasst.

14. Bauteil (5) nach dem vorhergehenden Anspruch, **dadurch gekennzeichnet, dass** die Trennwand (14) bogenförmig verläuft.

15. Bauteil (5) nach einem der beiden vorhergehenden Ansprüche, **dadurch gekennzeichnet, dass** die Eintrittsöffnungen der Schächte (6) unterschiedlich groß sind.
